# EUROPEAN PATENT SPECIFICATION

(11) **EP 4 047 900 B1**
(45) Date of publication and mention of the grant of the patent: **17.06.2026**
(21) Application number: 21305205.3
(22) Date of filing: 19.02.2021
(51) Int. Cl.: G06F 21/44, G06F 21/60, H04L 9/40, G06Q 10/02, G06Q 50/14

(54) **DATA EXCHANGE SYSTEM AND METHOD**
DATENAUSTAUSCHSYSTEM UND -VERFAHREN
SYSTÈME ET PROCÉDÉ D'ÉCHANGE DE DONNÉES

(43) Date of publication of application: 24.08.2022
(73) Proprietor: Amadeus S.A.S., 06410 Biot (FR)
(72) Inventor: BOCCALINI, Elisa, 06410 BIOT (FR); GALOPO, Michael Dominique Raymond, 06410 BIOT (FR); LANDRA, Corinne Francoise Pascale, 06410 Biot (FR); GENDRONNEAU, Maxime, 06410 Biot (FR); SDIRI, Mohamed, 06410 BIOT (FR); YANG, Liming, 06410 BIOT (FR)
(74) Representative: Samson & Partner Patentanwälte mbB

(56) References cited:
- US-A1- 2002 157 002
- US-A1- 2004 059 939
- US-A1- 2014 047 562
- US-A1- 2015 207 856

## Description

### FIELD OF THE INVENTION

The present invention generally relates to methods and systems for data exchange, in particular for data exchange via creating a virtual channel.

### BACKGROUND

In many situations when data is exchanged between distributed computing systems, between devices connected via a network, or the like, it is required to determine the authentication of a data requester. If the data that is to be exchanged differs for different data requesters, the known data exchange systems usually define policies for different users or user groups. These systems are inflexible in view of requests from new and unknown users as they require the users to be registered first. Additionally, the data providers are also not able to flexibly define which data is transmitted to which user.

An example state of the art data exchange system of controlled delivery of digital content with digital content access control is described in US 2004/0059939 A1. A user device sends a digital content request to a portal, where the user is authenticated. If the user is authorized to have access to the digital content, data is transmitted to the user device. An example of a data exchange system with client-selected user authentication in relation to accessing or acquiring online media content is described in US 2014/0047562 A1. If a client device is allocated to a subscriber account, the client device has access to a subset of content of services.

An example of a data exchange system comprising a domain-based digital rights management (DRM) method is described in US 2002/0157002 A1. User devices in a domain have access to content whereas user devices outside the domain may not be allowed to access the content. An example of a data exchange system for interconnecting content requesting clients with a content provider platforms offering content is described in US 2015/0207856 A1. A server is arranged to provide external access to application data and operates as a gateway for allowing data exchange between applications. With security measures such as authentication of clients, access can be controlled.

In some other systems, there is no possibility to flexibly add new parameters that enable clients to access specific data. For example, if content providers provide their content to a central or shared database, from which content receivers may access the data, it is nearly impossible to change the structure of the database or the user groups that are allowed to access the data. Moreover, it is sometimes required that some data is transmittable to all users and other data only to some users whereas others are not allowed to access this data.

The present invention tackles these problems by creating a virtual channel for specific user groups based on authentication conditions. The virtual channel then specifies at least a part of the data to transmit.

### SUMMARY

The present invention is defined by the independent claims.

A first aspect of the invention concerns a data exchange system for creating a virtual channel.

According to a second aspect of the invention, a method of exchanging data via a virtual channel is presented.

According to a third aspect of the invention, a computer program is provided to perform the method described herein.

Further aspects are defined by the dependent claims.

### BRIEF DESCRIPTION OF THE FIGURES

The subsequent description of embodiments is based on the accompanying set of figures in which similar reference numerals refer to similar elements and in which:
Fig. 1A shows the basic architecture of a data exchange system according to the invention.
Fig. 1B shows the data exchange system, in which a virtual channel has been created for data exchange from content provider to content receiver.
Fig. 2 shows another example of the data exchange system, in which two virtual channels have been created in response to a request from the content provider.
Fig. 3 shows a flowchart of an example method, in which the virtual channel is closed after transmission of the data.
Fig. 4 shows an example in which the data exchange system receives rules that activate authentication conditions.
Fig. 5 shows the data exchange system, in which the virtual channel connects the content receiver with a database storing data to be transmitted.
Fig. 6 and 7 show embodiments for data exchange in a flight search and booking environment.

### BRIEF DESCRIPTION OF THE FIGURES

As already outlined at the outset, the methodologies described herein relate to methods and systems for data exchange, in particular for data exchange via creating a virtual channel.

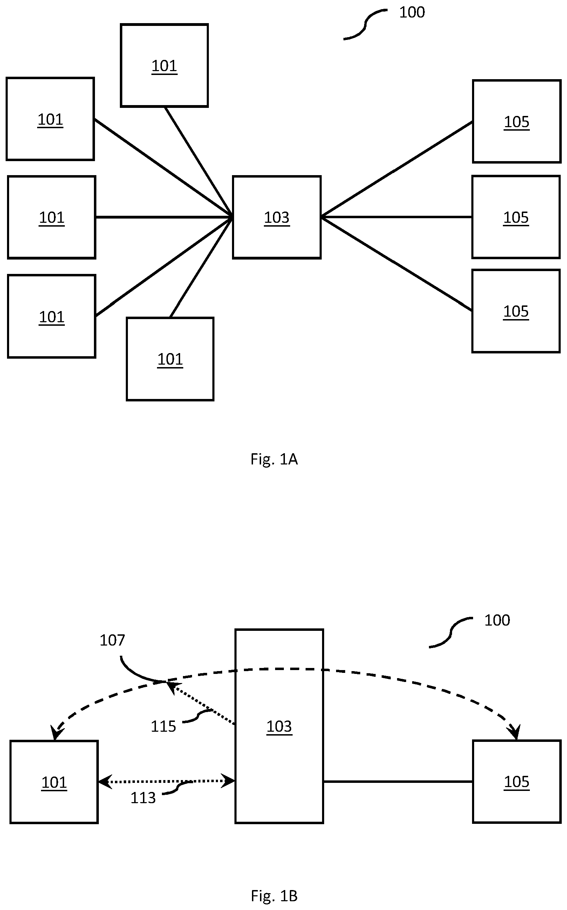

Fig. 1A shows the basic architecture of a data exchange system 100. The system 100 comprises at least one content receiver 101, a communication platform 103, and at least one content provider 105. A content receiver 101 denotes a computing system, such as a personal computer, a notebook, a netbook, a mobile phone, or any other device that can connect via a network to other devices, that requests data content, i.e. data, from a content provider 105.

The content provider 105 denotes another computing system that provides data. The communication platform 103 is an access point to which the content receiver 101 connects in order to request data from one or more content providers 105. The communication platform 103 is further connected to the one or more content providers 105 and is able to access the data provided. Hence, the communication platform enables the content receivers 101 to access, retrieve, or receive the data of the content providers 105.

The content receivers 101 may be connected with the communication platform 103 via a wide area network, global network, the Internet, or similar network, which may be a public or a private network, and may include multiple interconnected networks as is known in the art. The content providers 105 may also be connected with the communication platform 103 via a wide area network, global network, the Internet, or similar network, which may be a public or a private network, and may include multiple interconnected networks as is known in the art. Alternatively, the content providers 105 may also be part of a distributed computing system with the communication platform 103.

The communication platform 103 may be a single computing system hosted by a server or may comprise a plurality of distributed computing systems hosted by a plurality of servers. The communication platform 103 may include a processor, a memory, a mass storage memory device, an input/output (I/O) interface, and a Human Machine Interface (HMI). The communication platform 103 may also be operatively coupled to one or more external resources via a network or I/O interface. External resources may include, but are not limited to, servers, databases, mass storage devices, peripheral devices, cloud-based network services, or any other suitable computer resource that may be used by the communication platform 103. The communication platform 103 may comprise a plurality of functional modules that fulfil different tasks for enabling a connection between the content receivers 103 and the content providers 105.

For example, the communication platform may comprise a gateway module and a computing module. The gateway module may be the computing system, to which the content receivers 101 connect and sent their requests to. This connection between the content providers 101 and the gateway module may be based on a TCPT/IP protocol through the Internet, a LAN or any other suitable network. The content providers 101 may use a specific application programming interface to connect to the gateway module. Additionally or alternatively, the connection between the content providers 101 and the communication platform 103 may involve an intermediate service that receives requests from the content providers 101 and routes these requests to the communication platform 103.

Fig. 1B shows the data exchange system 100, in which a virtual channel has been created for data exchange from content provider 105 to content receiver 101. The communication platform determines whether the content receiver 101 satisfies predefined authentication conditions of the content provider 105. This is shown by the dotted arrow 113. If the content receiver 101 satisfies predefined authentication conditions of the content provider 105, a virtual channel 107 is created for transmitting the data. This is shown by the dotted arrow 113. There might also be a plurality of virtual channels 107 created, namely one for each data transfer between one content provider 105 and one content receiver 101. The virtual channel 107 further specifies at least a part of the data to be transmitted.

For example, if a virtual channel 107 is created, data that is specific to the content receiver 101 is transmitted from the content provider 105. However, there might also be data that is not specific to the content receiver 101 and that may be transmitted to all content receivers 101. This data may also be transmitted via the virtual channel 107 but is not specified by the virtual channel 107.

The determination of whether the content receiver 101 satisfies the authentications conditions may take place after the communication platform 103 receives a request from the content receiver 101. Alternatively, the determination may take place after the communication platform 105 receives a request from the content provider 105 for transmitting data to the content receiver 101.

Authentication conditions may be for example a content receiver identification, a content receiver connectivity identification, a content receiver group identification and/or a combination of those. For example, a content provider 105 may define that only content receivers 101 that connect via a mobile network may access specific data A, other content receivers 101 shall access data B.

When a content receiver 101 connected via a mobile network then requests data from the content provider 105, the communication platform 103 compares the content receiver connectivity identification of the content receiver 101, which is for example "mobile network", with the provided authentication condition from the content provider 105, the virtual channel 107 is created and data A is transmitted to the content receiver 101. Other data, which may be identical for content receivers 101 not fulfilling the authentication conditions, may also be transmitted to the content receiver101. Other authentication conditions may also be applicable depending on the specific embodiments.

In a preferred embodiment, the authentication conditions may comprise a combination of a content receiver connectivity identification with at least one of a content receiver identification or a content receiver group identification.

As can be seen in Fig. 1B the virtual channel 107 is handled by the communication platform 103. There is no real data connection, i.e. real channel, between the content provider 105 and the content receiver 101 but the data is transferred via the virtual channel 107 over the communication platform 103. The virtual channel 107 may be a secured connection via the communication platform.

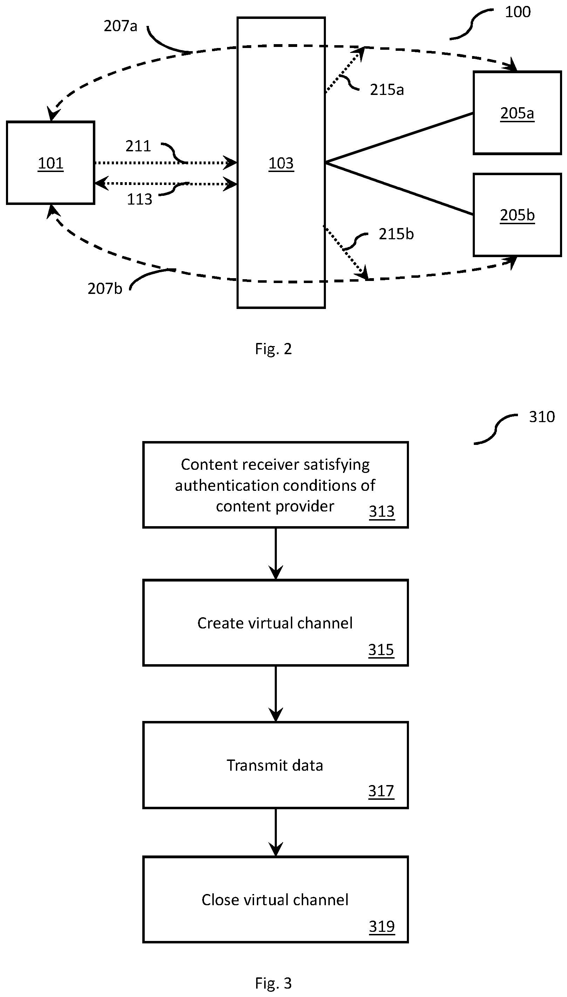

Fig. 2 shows another example of data exchange in the data exchange system 100. In this case, the content receiver 101 sends a request for data to the communication platform 103, which is shown by the dotted arrow 211. The communication platform 103 may then determine that the data requested can be retrieved from two content providers 205a, 205b comprised by the at least one content provider 105 to which the communication platform 103 is connected. The request of the content receiver 101 may also define that data is requested from those two content providers 205a, 205b.

The communication platform 103 then determines whether the content receiver 101 satisfies authentication conditions (dashed arrow 113) provided by the content providers 205a, 205b. These authentication conditions may be identical but may also be different for some or all content providers 105, 205a, 205b. In response to the content receiver 101 fulfilling the authentication conditions of the content providers 205a, 205b, the communication platform 103 creates two virtual channels 207a, 207b, shown by dotted arrows 215a, 215b.

In a preferred embodiment, the virtual channel 107 is terminated or closed when the data transfer has been finished. Fig. 3 shows an example method 310 of this embodiment. In response to the content receiver satisfying predefined authentication conditions of the content provider (box 313), the virtual channel 107 is created (box 315). After creating the virtual channel 107, the data is transmitted (box 317). Finally, the virtual channel is closed (box 319), which means that the communication platform no longer allows the content receiver 101 to access or receive any data from the content provider 105 that is protected for access by authentication conditions.

Transmitting data may comprise transmitting one or more data packets. The data packets may contain files or raw data, and may also be modified by the communication platform 103 if required. The transmission is finished when all data packets have been transmitted to fulfil the request of the content receiver 101 and/or the content provider 105.

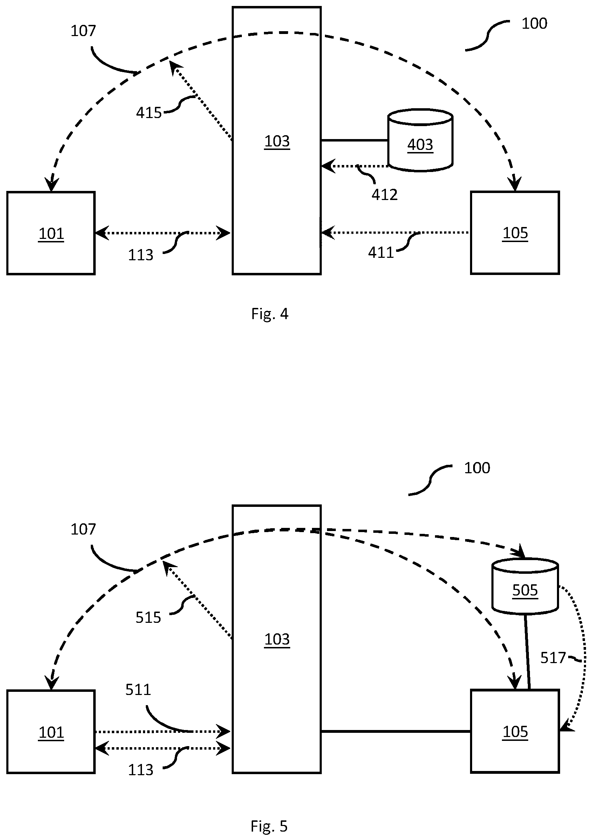

In some embodiments, not all possible authentication conditions are used by each content provider 105 to protect specific data. To be able to determine which authentication conditions are applicable for which content provider 105, the communication platform 103 may comprise or receive rules that activate which authentication conditions are used. This is shown in Fig. 4.

In this example, the creation of a virtual channel 107 is initiated by the content provider 105 (dotted arrow 411). For example, the content provider 105 may be a software distributor that requests the communication platform to enable a rollout of a software update to a specific content receiver 101, e.g. to a client having the original software installed. The process may - of course - also be initiated by the content receiver 101.

The communication platform 103 comprises a storage 403 that stores a plurality of rules. The storage 403 may comprise volatile and non-volatile memory, multilevel cell flash memory, triple level cell flash memory, and/or cloud storage or backup systems. It should be appreciated that the storage 403 described herein may be a combination of multiple storage resources, including but not limited to those referenced herein. The data storage 403 may further include different storage technologies, may be situated at different locations, or may also be part of the communication platform 103.

The storage 403 comprises a plurality of rules, which can be activated by the content providers 105 and/or can have different priorities. The communication platform 103 then retrieves the rules (dotted arrow 412) and analyses them to determine which authentication conditions are used to authenticate the content perceivers 101.

For example, the rules for a software distributor A may activate rules to use a content receiver group identification as authentication condition for distributing a specific pro-version software update to a specific content receiver group, e.g. such content receivers 101 that have the pro-version software installed. Software distributor B may activate other rules to use a content receiver connectivity identification as authentication condition for distributing a specific lightweight software update to content receivers 101 that connect via a mobile network. Hence, the authentication conditions applied for both content providers 105, i.e. for software distributor A and B, differ.

After having determined whether the content receiver 101 satisfies the predefined authentication conditions of the content provider 105, which is again shown by the dotted arrow 113, the communication platform 103 creates the virtual channel 107 as shown by dotted arrow 415.

The content provider 105 may also use a database 505 to store data to be transmitted, which is shown in Fig. 5. The database may be an external database in which a plurality of content providers 105 store data to be transmitted to content receivers 101. The data sent via the virtual channel 107 is then, for example, retrieved at least in part from the database 505. Alternatively, the database 505 may also be a database in which only one content provider 105 stores its data and, thus, be part of the content provider computing system 105 or directly connected to it.

The process performed in the data exchange system 100 may be started with a request from the content receiver 101 (dotted arrow 511). Then, the communication platform 103 determines whether the content receiver 101 satisfies the predefined authentication conditions of the content provider 105 (dotted arrow 113) and creates a virtual channel 107 between the content receiver 101 and the content provider 105 (dotted arrow 515).

The virtual channel 107 may connect the database 505, the content provider 105, e.g. the computing system or server of the content provider 105, or both with the content receiver 101. If the virtual channel 107 only connects the content provider 105 with the content receiver 101 but not the database 505, data from the database may be transmitted to the content provider 105 before transmitting it over the virtual channel 107 (shown by dotted arrow 517). If the virtual channel 107 at least partially connects the database 505 with the content receiver 101, the data may be transmitted directly from the database 505 and the data transfer shown by the dotted arrow 517 may not be required.

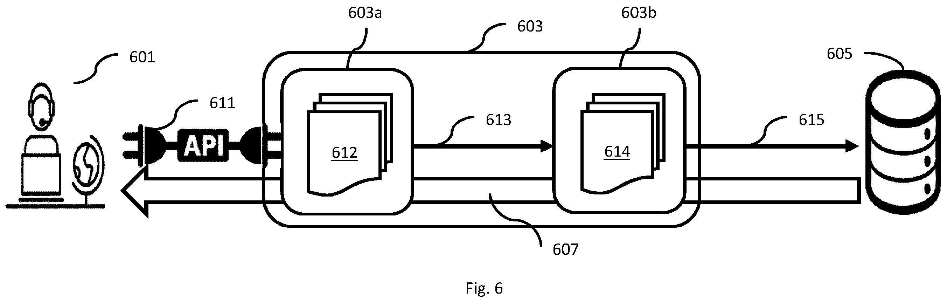

Fig. 6 shows an embodiment of the data exchange system in a flight search and booking environment. Airlines want to protect their content with regard to different travel sellers, e.g. travel agents, booking platforms, and the like. The New Distribution Capability (NDC) is a travel industry-supported program launched by International Air Transport Association (IATA). The NDC Standard enhances the capability of communications between airlines and travel sellers and enables a more flexible distribution of products and, in particular, fares to travel sellers. The NDC Standard is open to any third party, intermediary IT-provider or non-IATA member, to implement and use.

The airlines usually use a central repository or shared database, to which they distribute their travel products with a plurality of fares for each product. A travel seller can for example connect via a Global Distribution System (GDS) - which is a computer network operating as a middleman between travel agents and numerous travel service providers - channel or directly via the NDC application programming interface (API) to an NDC management system to access these travel products. In the state of the art, the airlines can specify content only for specific travel sellers. Hence, a travel seller identification is the only authentication condition that is checked for assessing travel products. The data exchange system as disclosed now improves the data exchange by creating a virtual channel that enables the combination of two or more authentication conditions in a flexible way without the need to modify the central shared database.

Airlines are enabled to file specific fares for different authentication conditions, such as channel identification, travel seller identification, travel aggregator identification and the like as well as combinations of those. The channel identification may concern whether the travel seller connects via NDC API or via a travel aggregator, such as GDS, Online Travel Agencies (OTA), Travel Management Companies (TMC) or the like. The travel seller identification may be the IATA-number of the travel seller or a pseudo city code. A travel aggregator identification may be - for example - the specific GDS provider.

In the example of Fig. 6, a travel seller 601 sends a request to a communication platform 603. The communication platform 603 comprises an NDC management component 603a and a pricing engine component 603b. The NDC management component 603a may also comprise a gateway to which the travel sellers 601 or travel aggregators, may connect. In the example of Fig. 6, the travel seller 601 directly connects through an API with the NDC management component 603a.

The NDC management component 603a has access to a plurality of rules 612 filed by airlines that have also filed their travel products and fares to a shared database 605. For example, if airline AIR1 decided to have different fares and/or flight products for specific travel sellers and also for specific channels, e.g. for travel sellers connecting directly via the channel NDC API, the rules for the airline AIR1 may define that these two authentication conditions, i.e. travel seller identification and channel identification, are required for exchanging data. The rules may also specify a hierarchy of the authentication conditions, e.g. which dominates the others. Alternatively, the hierarchy may be defined globally for all airlines.

After receiving the request from the travel seller 601, the NDC management component 603a determines - e.g. based on the request of the travel seller 601 - which rules apply for the request. For example, if the request requires access to data from an airline AIR1, the NDC management component 603a accesses the rules of airline AIR1 and determines which rules 612 apply for the request. The determination may be based solely on the airline, i.e. all filed rules 612 of this airline apply, or also on further criteria, e.g. region, market, time of day, date, and such.

The NDC management component 603a then collects the required authentication condition values 614 of the seller 601. For example, the NDC management component 603a may determine the IATA-number of the travel seller 601 and how the travel seller 601 connects, i.e. in this case via NDC API. The NDC management component 603a transmits the collected authentication condition values 614 of the travel seller 601 along with the rules to the pricing engine component 603b, shown by arrow 613.

The pricing engine component 603b compares the collected authentication condition values 614 of the travel seller 601 and the rules 612 of the airline received from the NDC management component 603b to determine which authentication conditions the travel seller 601 fulfils and which virtual channel 607 can be created. If the pricing engine component 603b determines that the travel seller 601 satisfies one or more authentication conditions, it connects to the shared database 605 to create the virtual channel 607 over which the specific data for the travel seller 601 is transmitted. Additionally, data that is accessible to all travel sellers, i.e. data and time of the travel product, may also be transmitted over the virtual channel 607.

As an example, if the rules of airline AIR1 define that the travel seller identification and the channel identification are the authentication conditions required for exchanging specific data with the channel identification being the dominant one, the pricing engine component 603b may first compare the received channel identification of the travel seller, e.g. "NDC API", with predefined channel identification values of AIR1. If AIR1 has not filed specific fares for connection via NDC API, no virtual channel 607 will be created and data exchange will be performed as usual, e.g. transmitting the not protected or standard fares to the travel seller 601.

If AIR1 has filed specific fares for connection via NDC API, the pricing engine component 603b then compares the IATA-number of the travel seller 601 (or alternatively a number that identifies a seller group or such) with specific predefined travel seller numbers that e.g. get a discount from the airline. If the travel seller 601 also satisfies this criterion, a virtual channel 607 will be created and fares specific to the NDC connection and the travel seller 601 will be transmitted via the virtual channel 607.

The invention enables an easy management and recognition of the used channel while the fare filing to the shared database 605 can remain unchanged. Keywords used as authentication conditions can be flexibly added by a rule engine comprised by the communication platform 603. The rule engine may be part of the NDC management component 603a, the pricing engine component 603b, or may be an additional component of the communication platform. In an example, the rule engine may apply a machine learning model or other suitable automatized methods to create the keywords. Keywords can also be added to the fare filing of the airlines on demand. In such an example, the airlines create keywords that are flexibly used by the communication platform 603 to evaluate whether a virtual channel is created or not. Thus, the invention gives the possibility to differentiate the fare content for all travel sellers 601 sharing the same channel identification. It is further possible to differentiate the fare content for all travel sellers 601 sharing the same office identification or belonging to any other defined group.

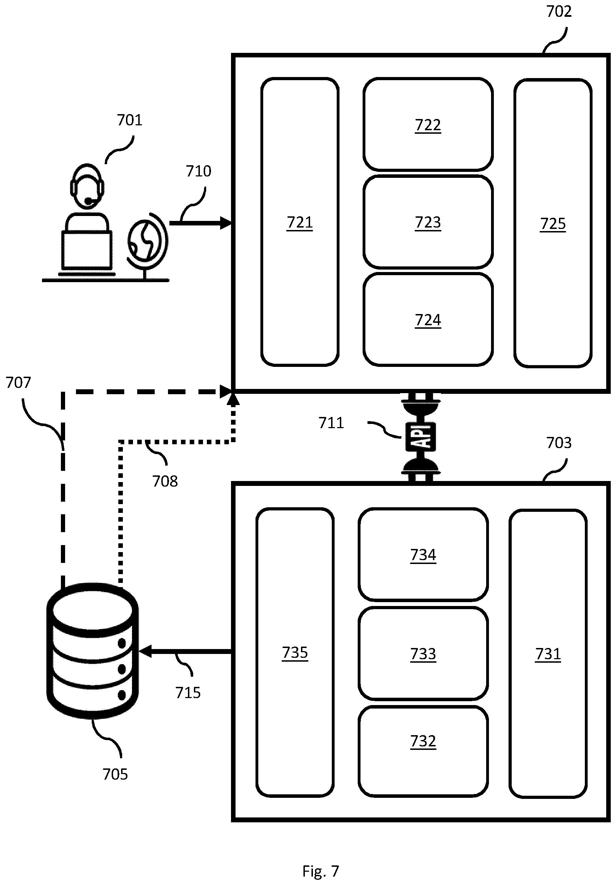

Fig. 7 shows another embodiment in a flight search and booking environment. In this example, the travel seller 701 connects to an aggregator system 702 (shown by arrow 710). An aggregator system 702 can be a GDS system, OTA system, TMC system, and the like. The aggregator system 702 may comprise a travel API 721 to which the travel sellers 702 connect. The aggregator system 702 may further comprise an offer module 722, order module 723, and a payment module 724 as well as other modules that are not shown.

In such an example, the offer module 722 receives requests from the travel seller 701 and generates the offers for the travel seller 701 from data received from the airlines. The order module 723 then receives the orders from the travel seller 701 and generates orders to submit to the airlines. The payment module 724 finally manages the payment of the travel seller 701 or the traveller respectively. The aggregator system 702 may further comprise a content module 725 that handles requesting, retrieving and processing of the airline content. For example, the content module 725 may connect via an NDC API 711 with an airline NDC communication system 703.

The airline NDC communication system 703 may also comprise several modules, such as an offer management module 731, an order management module 732, a payment platform 733, a revenue management module 734, and a pricing engine 735 as well as other modules that are not shown. The offer management module 731 may receive the requests directly from the travel sellers 701 or - as in this example - from the aggregator system 702. The offer management module 731 may for example correspond to the NDC management component 603a of Fig. 6 and fulfil at least part of the processes described above for the other embodiments.

The offer management module 732 may for example determine which rules apply and which authentication condition values to collect. The order management module 732 may handle the orders, e.g. reservations of flight products, received from the aggregator system 702 and finalize the booking with the airlines. The payment platform 733 handles the payment of a travel booking and the revenue management module 732 predicts consumer behaviour and optimizes product availability and price to maximize revenue growth.

The pricing engine 735 may correspond to the pricing engine component 603b of Fig. 6. The pricing engine 735 may fulfil at least part of the processes described above for the other embodiments. The pricing engine 735 may for example compare collected authentication condition values of the travel seller 701 and rules of the airlines to determine which authentication conditions the travel seller 601 satisfies. The pricing engine 735 then connects to a fare database 705 of the airlines and creates a virtual channel 707 to transmit specific data to the aggregator system 702 if the travel seller 701 satisfies the predefined authentication conditions. If the travel seller 701 does not satisfy predefined authentication conditions, the pricing engine 735 may enable transmitting data via a normal channel 708.

The pricing engine 735 may also create keywords that may be used as authentication conditions as described for the embodiment of Fig. 6. In other embodiments, these keywords may also be created by a separate rule engine (not shown) or a merchandising engine (not shown) comprised by the NDC communication system 703. There may also be an interplay of the NDC communication system 703 and the airlines filing their fares on the generation of keywords. In an example, a private link in the fare filing of the airlines may initiate a generation of keywords used as authentication conditions by a component of the NDC communication system 703.

In another embodiment, a computer program comprising instructions is provided. These instructions, when the program is executed by a computer, cause the computer to carry out the data exchange method as described herein. The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations of the invention have been described herein, further modifications and alternatives will be apparent to persons skilled in the relevant arts. In particular, the examples are offered by way of illustrating the invention, and to provide a number of specific methods and arrangements for putting the invention into effect.

Accordingly, the described embodiments should be understood as being provided by way of example, for the purpose of teaching the general features of the invention, but should not be understood as limiting the scope of the invention, which is as defined in the appended claims.

## Claims

1. A data exchange system for creating a virtual channel, the system comprising:
at least one content provider;
at least one content receiver; and
a communication platform for connecting the at least one content provider to the at least one content receiver;
**characterised in that**
the communication platform is configured to create a virtual channel for transmitting data between a content provider and a content receiver in response to the content receiver satisfying predefined authentication conditions of the content provider, wherein the data transmitted over the virtual channels are dependent on the predefined authentication conditions satisfied by the content receiver, wherein the authentication conditions comprise a combination of a content receiver connectivity identification, identifying how the content receiver connects to the content provider, with a content receiver group identification, identifying to which group of content receivers the content receiver is belonging.

2. The system of claim 1, wherein the virtual channel is created in response to a request for data from the content receiver.

3. The system of claim 1 or 2, wherein the virtual channel is closed after transmitting the data.

4. The system of any one of claims 1 to 3, wherein the communication platform comprises a plurality of rules, wherein the rules activate which authentication conditions are used to create the virtual channel.

5. The system of any one of claims 1 to 4, wherein the data comprises flight information and wherein specific data comprises fares for the flight information to transmit.

6. A method of exchanging data via a virtual channel, wherein the method is executed at a communication platform for connecting at least one content provider to at least one content receiver, the method comprising:
creating a virtual channel between a content provider and a content receiver in response to the content receiver satisfying authentication conditions of the content provider;
transmitting data from the content provider to the content receiver, wherein the data transmitted over the virtual channel are dependent on the predefined authentication conditions satisfied by the content receiver, wherein the authentication conditions comprise a combination of a content receiver connectivity identification, identifying how the content receiver connects to the content provider, with a content receiver group identification, identifying to which group of content receivers the content receiver is belonging.

7. The method of claim 6, wherein the method is initiated by receiving a request for data from the content receiver.

8. The method of claim 6 or 7, wherein the virtual channel is closed after transmitting the data.

9. The method of any one of claims 6 to 8, wherein the content provider stores at least part of the data to be transmitted to the content receiver in a database, wherein the data sent via the virtual channel is at least in part retrieved from the database.

10. The method of any one of claims 6 to 9, wherein the data comprises flight information and wherein specific data comprises fares for the flight information to transmit.

11. A computer program comprising instructions which, when the program is executed by a computer, cause the computer to carry out the method according to any one of claims 6 to 10.

## Patentansprüche

1. Ein Datenaustauschsystem zum Erstellen eines virtuellen Kanals, wobei das System umfasst:
mindestens einen Inhaltsanbieter;
mindestens einen Inhaltsempfänger; und
eine Kommunikationsplattform zum Verbinden des mindestens einen Inhaltsanbieters mit dem mindestens einen Inhaltsempfänger;
**dadurch gekennzeichnet, dass**
die Kommunikationsplattform so konfiguriert ist, dass sie einen virtuellen Kanal zur Übertragung von Daten zwischen einem Inhaltsanbieter und einem Inhaltsempfänger erstellt, wenn der Inhaltsempfänger vordefinierte Authentifizierungsbedingungen des Inhaltsanbieters erfüllt, wobei die über die virtuellen Kanäle übertragenen Daten von den vom Inhaltsempfänger erfüllten vordefinierten Authentifizierungsbedingungen abhängen, wobei die Authentifizierungsbedingungen eine Kombination aus einer Identifikation der Konnektivität des Inhaltsempfängers, die angibt, wie der Inhaltsempfänger mit dem Inhaltsanbieter verbunden ist, und einer Identifikation der Inhaltsempfängergruppe, die angibt, zu welcher Gruppe von Inhaltsempfängern der Inhaltsempfänger gehört, umfassen.

2. System nach Anspruch 1, wobei der virtuelle Kanal als Reaktion auf eine Datenanforderung des Inhaltsempfängers erstellt wird.

3. Das System nach Anspruch 1 oder 2, wobei der virtuelle Kanal nach der Übertragung der Daten geschlossen wird.

4. Das System nach einem der Ansprüche 1 bis 3, wobei die Kommunikationsplattform eine Vielzahl von Regeln umfasst, wobei die Regeln festlegen, welche Authentifizierungsbedingungen zur Erstellung des virtuellen Kanals verwendet werden.

5. Das System nach einem der Ansprüche 1 bis 4, wobei die Daten Fluginformationen umfassen und wobei spezifische Daten Flugpreise für die zu übertragenden Fluginformationen umfassen.

6. Verfahren zum Austausch von Daten über einen virtuellen Kanal, wobei das Verfahren auf einer Kommunikationsplattform ausgeführt wird, um mindestens einen Inhaltsanbieter mit mindestens einem Inhaltsempfänger zu verbinden,
wobei das Verfahren umfasst:
Erstellen eines virtuellen Kanals zwischen einem Inhaltsanbieter und einem Inhaltsempfänger als Reaktion darauf, dass der Inhaltsempfänger Authentifizierungsbedingungen des Inhaltsanbieters erfüllt;
Übertragen von Daten vom Inhaltsanbieter an den Inhaltsempfänger, wobei die über den virtuellen Kanal übertragenen Daten von den vordefinierten Authentifizierungsbedingungen abhängen, die der Inhaltsempfänger erfüllt, wobei die über die virtuellen Kanäle übertragenen Daten von den vom Inhaltsempfänger erfüllten vordefinierten Authentifizierungsbedingungen abhängen, wobei die Authentifizierungsbedingungen eine Kombination aus einer Identifikation der Konnektivität des Inhaltsempfängers, die angibt, wie der Inhaltsempfänger mit dem Inhaltsanbieter verbunden ist, und einer Identifikation der Inhaltsempfängergruppe, die angibt, zu welcher Gruppe von Inhaltsempfängern der Inhaltsempfänger gehört, umfassen.

7. Verfahren nach Anspruch 6, wobei das Verfahren durch den Empfang einer Datenanforderung vom Inhaltsempfänger initiiert wird.

8. Verfahren nach Anspruch 6 oder 7, wobei der virtuelle Kanal nach der Übertragung der Daten geschlossen wird.

9. Verfahren nach einem der Ansprüche 6 bis 8, wobei der Inhaltsanbieter zumindest einen Teil der an den Inhaltsempfänger zu übertragenden Daten in einer Datenbank speichert, wobei die über den virtuellen Kanal gesendeten Daten zumindest teilweise aus der Datenbank abgerufen werden.

10. Verfahren nach einem der Ansprüche 6 bis 9, wobei die Daten Fluginformationen umfassen und wobei spezifische Daten Flugpreise für die zu übertragenden Fluginformationen umfassen.

11. Ein Computerprogramm, das Anweisungen umfasst, die, wenn das Programm von einem Computer ausgeführt wird, den Computer veranlassen, das Verfahren gemäß einem der Ansprüche 6 bis 10 durchzuführen.

## Revendications

1. Système d'échange de données pour créer un canal virtuel, le système comprenant :
au moins un fournisseur de contenu ;
au moins un destinataire de contenu ; et
une plateforme de communication pour connecter l'au moins un fournisseur de contenu à l'au moins un destinataire de contenu ;
**caractérisé en ce que**
la plateforme de communication est configurée pour créer un canal virtuel destiné à transmettre des données entre un fournisseur de contenu et un destinataire de contenu en réponse au destinataire de contenu satisfaisant à des conditions d'authentification prédéfinies du fournisseur de contenu, dans lequel les données transmises sur les canaux virtuels dépendent des conditions d'authentification prédéfinies satisfaites par le destinataire de contenu, dans lequel les conditions d'authentification comprennent une combinaison d'une identification de connectivité de destinataire de contenu, identifiant la manière dont le destinataire de contenu se connecte au fournisseur de contenu, avec une identification de groupe de destinataires de contenu, identifiant le groupe de destinataires de contenu auquel appartient le destinataire de contenu.

2. Système selon la revendication 1, dans lequel le canal virtuel est créé en réponse à une demande de données provenant du destinataire de contenu.

3. Système selon la revendication 1 ou 2, dans lequel le canal virtuel est fermé après transmission des données.

4. Système selon l'une quelconque des revendications 1 à 3, dans lequel la plateforme de communication comprend une pluralité de règles, dans lequel les règles activent les conditions d'authentification qui sont utilisées pour créer le canal virtuel.

5. Système selon l'une quelconque des revendications 1 à 4, dans lequel les données comprennent des informations de vol et dans lequel des données spécifiques comprennent des tarifs pour les informations de vol à transmettre.

6. Méthode d'échange de données par l'intermédiaire d'un canal virtuel, dans laquelle la méthode est exécutée sur une plateforme de communication pour connecter au moins un fournisseur de contenu à au moins un destinataire de contenu,
la méthode comprenant :
la création d'un canal virtuel entre un fournisseur de contenu et un destinataire de contenu en réponse au destinataire de contenu satisfaisant à des conditions d'authentification du fournisseur de contenu ;
la transmission de données du fournisseur de contenu au destinataire de contenu, dans laquelle les données transmises sur le canal virtuel dépendent des conditions d'authentification prédéfinies satisfaites par le destinataire de contenu, dans laquelle les conditions d'authentification comprennent une combinaison d'une identification de connectivité de destinataire de contenu, identifiant la manière dont le destinataire de contenu se connecte au fournisseur de contenu, avec une identification de groupe de destinataires de contenu, identifiant le groupe de destinataires de contenu auquel appartient le destinataire de contenu.

7. Méthode selon la revendication 6, dans laquelle la méthode est initiée par la réception d'une demande de données provenant du destinataire de contenu.

8. Méthode selon la revendication 6 ou 7, dans laquelle le canal virtuel est fermé après transmission des données.

9. Méthode selon l'une quelconque des revendications 6 à 8, dans laquelle le fournisseur de contenu stocke au moins une partie des données à transmettre au destinataire de contenu dans une base de données, dans laquelle les données envoyées via le canal virtuel sont au moins en partie extraites de la base de données.

10. Méthode selon l'une quelconque des revendications 6 à 9, dans laquelle les données comprennent des informations de vol et dans laquelle des données spécifiques comprennent des tarifs pour les informations de vol à transmettre.

11. Programme d'ordinateur comprenant des instructions qui, lorsque le programme est exécuté par un ordinateur, amènent l'ordinateur à mettre en œuvre la méthode selon l'une quelconque des revendications 6 à 10.
